# EUROPEAN PATENT SPECIFICATION

(11) **EP 0 520 146 B1**
(45) Date of publication and mention of the grant of the patent: **15.01.1997**
(21) Application number: 92105685.9
(22) Date of filing: 02.04.1992
(51) Int. Cl.: C08L 71/12, C08L 77/00, C08L 53/02, C08K 5/15

(54) **Process for preparing a thermoplastic resin composition**
Verfahren zur Herstellung einer thermoplastischen Harzmischung
Procédé de préparation d'une composition de résine thermoplastique

(30) Priority: 08.04.1991 JP 101747/91
(43) Date of publication of application: 30.12.1992
(73) Proprietor: MITSUBISHI CHEMICAL CORPORATION, Chiyoda-ku, Tokyo (JP)
(72) Inventor: Takagi, Kiyoji, Yokkaichi Research Center, Yokkaichi-shi, Mie-ken (JP); Nishida, Koji, Yokkaichi Research Center, Yokkaichi-shi, Mie-ken (JP); Ohi, Shigekazu, Yokkaichi Research Center, Yokkaichi-shi, Mie-ken (JP); Itou, Tosio, Yokkaichi Research Center, Yokkaichi-shi, Mie-ken (JP)
(74) Representative: Brauns, Hans-Adolf, Dr. rer. nat.

(56) References cited:
- EP-A- 0 337 814
- EP-A- 0 415 344
- PATENT ABSTRACTS OF JAPAN vol. 15, no. 132 (C-819)(4660) 29 March 1991

## Description

### BACKGROUND OF THE INVENTION

This invention relates to a process for preparing a thermoplastic resin composition excellent in appearance and impact resistance of the molded product.

A polyphenylene ether has been attracted to attention as an available engineering plastics having excellent mechanical properties and heat resistance, and it has been used by blending with a styrene type resin. However, a product prepared by the blended material is remarkably poor in solvent resistance and in order to solve the problem, it has been proposed a blend with a polyamide (e.g. Japanese Patent Publication No. 41663/1984) or a blend with a polyester (e.g. Japanese Patent Publication No. 21662/1976 which corresponds to U.S. Patent No. 4,338,421).

Further, in order to improve impact resistance of these blended resins, there has been proposed a composition in which a compound having a polar group such as a carboxyl group, an imide group and an epoxy group and a rubber material as an impact modifier are added to a combination of a polyphenylene ether and a polyamide (Japanese Provisional Patent Publication No. 49753/1981).

Also, such a polyphenylene ether resin composition is now utilized as an out-side plate material of an automobile so that it is required to improve a balance between low temperature impact resistance and rigidity. Thus, it has been proposed a composition comprising a modified polyphenylene ether intermediate, a polyamide and an impact modifier (Japanese Provisional Patent Publication No. 19664/1989 which corresponds to U.S. Patent No. 5,026,787).

EP-A-0 415 344 discloses a process for preparing a resin composition by melting and kneading a polyphenylene ether, a polyamide, an impact modifier and an α,β-unsaturated dicarboxylic acid, acid anhydride or derivatives thereof and then kneading the intermediate composition with a polyamide.

A polyphenylene ether resin composition having such an excellent characteristics of heat resistance, low temperature impact resistance, solvent resistance and dimensional stability has now been utilized for an out-side plate material of an automobile such as a fender and door panel. However, since a large scale product is molded at a high temperature, an insufficient product is frequently produced, which is caused by a poor thermal stability, such as yellowing and silver streaking on the surface of the molded product.

### SUMMARY OF THE INVENTION

An object of the present invention is to overcome the problems possessed by the above prior art resin composition and to provide a resin composition which has good molded surface without occurring yellowing and silver streaking, without impairing low temperature impact resistance.

The present inventors have studied intensive studies in order to accomplish the above object and as the results, they have found that a resin composition prepared by previously melting and kneading a polyphenylene ether, a polyamide, an impact modifier and a compound having both of an unsaturated group and a polar group in the same molecule in an amount of not more than 100 ppm to form an intermediate composition and then formulating a polyamide, does not occur any insufficient appearance such as yellowing and silver streaking at high temperature molding and well balanced in physical properties of low temperature impact resistance and rigidity, whereby established the present invention.

That is, the present invention is a process for preparing a thermoplastic resin composition which comprises (primary) melting and kneading, based on the total amounts of the following components (a), (b), (c) and (d),
(a) 56 to 99 % by weight of a polyphenylene ether,
(b) 0.1 to 4.9 % by weight of a polyamide,
(c) 0.1 to 40 % by weight of an impact modifier and
(d) 0.2 to 10 % by weight of a compound having both of an unsaturated group and a polar group in the same molecule,
to obtain an intermediate composition (A) in which an amount of an unreacted remaining Component (d) is made less than 100 ppm, and (secondary) melting and kneading, based on the total amounts of the following components (A) and (B),
(A) 10 to 80 % by weight of the intermediate composition and
(B) 20 to 90 % by weight of a polyamide.

### DESCRIPTION OF THE PREFERRED EMBODIMENTS

In the following, the process for preparing the thermoplastic resin composition of the present invention is explained in detail.

The polyphenylene ether of Component (a) has a structure represented by the formula (I): 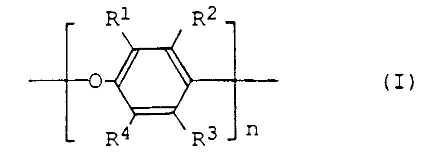 wherein n is an integer of at least 50, R¹, R², R³ and R⁴ each represents a monovalent substituent selected from the group consisting of hydrogen atom, a halogen atom, a hydrocarbon group having no tert-α-carbon atoms, a halohydrocarbon group in which a halogen atom is substituted by through at least two carbon atoms, a hydrocarbonoxy group and a halohydrocarbonoxy group in which a halogen atom is substituted by through at least two carbon atoms.

As the hydrocarbon group having no tert-α-carbon atoms, there may be mentioned, for example, a lower alkyl group having 1 to 8 carbon atoms such as methyl, ethyl, propyl, isopropyl and butyl; an alkenyl group having 2 to 8 carbon atoms such as vinyl, allyl, butenyl and cyclobutenyl; an aryl group such as phenyl, tolyl, xylenyl and 2,4,6-trimethylphenyl; and an aralkyl group such as benzyl, phenylethyl and phenylpropyl.

As the halohydrocarbon group in which a halogen atom is substituted by through at least two carbon atoms, there may be mentioned, for example, 2-chloroethyl, 2-bromoethyl, 2-fluoroethyl, 2,2-dichloroethyl, 2- or 3-bromopropyl, 2,2-difluoro-3-iodopropyl, 2-, 3-, 4- or 5-fluoroamyl, 2-chlorovinyl, chloroethylphenyl, ethylchlorophenyl, fluoroxylyl, chloronaphthyl and bromobenzyl.

Also, as the hydrocarbonoxy group, there may be mentioned, for example, methoxy, ethoxy, propoxy, butoxy, phenoxy, ethylphenoxy, naphthoxy, methylnaphthoxy, benzyloxy, phenylethoxy and tolylethoxy.

As the halohydrocarbonoxy group in which a halogen atom is substituted by through at least two carbon atoms, there may be mentioned, for example, 2-chloroethoxy, 2-bromoethoxy, 2-fluoroethoxy, 2,2-diboromoethoxy, 2- or 3-bromopropoxy, chloroethylphenoxy, ethylchlorophenoxy, iodoxyloxy, chloronaphthoxy, bromobenzyloxy and chlorotolylethoxy.

In the polyphenylene ether to be used in the present invention, there may be included a copolymer such as a copolymer of 2,6-dimethylphenol and 2,3,6-trimethylphenol, a copolymer of 2,6-dimethylphenol and 2,3,5,6-tetramethylphenol, and a copolymer of 2,6-dimethylphenol and 2,3,6-trimethylphenol. Also, a modified polyphenylene ether may be used, such as those in which a styrene type monomer (e.g. styrene, p-methylstyrene and α-methylstyrene) is graft polymerized to the polyphenylene ether of the formula (I).

The process for preparing the polyphenylene ether corresponding to the above is known, and there are disclosed in, for example, U.S. Patents No. 3,306,874, No. 3,306,875, No. 3,257,357 and No. 3,257,358, Japanese Patent Publication No. 17880/1977 and Japanese Provisional Patent Publication No. 51197/1975.

Preferred polyphenylene ether may include that having alkyl substituents at two ortho positions of the ether oxygen atom bonded position and a copolymer of 2,6-dialkylphenol and 2,3,6-trialkylphenol. The polyphenylene ether is preferably those having an intrinsic viscosity of 0.25 to 0.70 dl/g (measured at 30 °C in chloroform). If the intrinsic viscosity is less than 0.25 dl/g, impact resistance and heat resistance of the molded product are not preferred, while it exceeds 0.70 dl/g, molding processing (fabrication) becomes difficult. Also, in order to improve molding processability of the resin, polyphenylene ethers having high viscosity and low viscosity may be used in combination.

Next, the polyamide of Component (b) is that having -CONH-bond in the main chain and capable of melting by heating. Representative example may include Nylon-4, Nylon-6, Nylon-6,6, Nylon-4,6, Nylon-12 and Nylon-6,10, and other crystalline or non-crystalline polyamides containing a monomer component such as aromatic diamine or aromatic dicarboxylic acid may be used. Here, the non-crystalline polyamide refers to a polyamide of which a heat of fusion measured by differential scanning calorimeter (DSC) is less than 1 cal/g.

Preferred polyamides are Nylon-6,6, Nylon-6 or a non-crystalline polyamide, of these, the non-crystalline polyamide is particularly preferred. The polyamide preferably has a relative viscosity of 2.0 to 8.0 (measured at 25 °C in 98 % conc. sulfuric acid).

Next, the impact modifier of Component (c) is a rubbery substance which is added to improve impact resistance, and there may be mentioned, for example, an elastomer such as an alkenylaromatic compound-conjugated diene copolymer and a polyolefin type copolymer.

Also, those in which these elastomers were subjected to graft polymerization with an α,β-unsaturated dicarboxylic acid such as maleic acid, monomethylmaleate, maleic anhydride, itaconic acid, momomethylitaconate, itaconic anhydride and fumaric acid, or an alicyclic carboxylic acid such as endo-bicyclo[2.2.1]-5-hepten-2,3-carboxylic acid or a derivative thereof by utilizing a peroxide, an ionized radiation or an UV ray may be used.

If the modulus of tension of these elastomers is too high, it becomes insufficient as an impact modifier, so that an elastomer having the modulus of tension of less than 5,000 kg/cm² (ASTM D882) is preferred.

Next, the compound having both of an unsaturated group and a polar group in the same molecule of Component (d) is a compound having an unsaturated group, i.e. carbon-carbon double bond or carbon-carbon triple bond and a polar group, i.e. a functional group which shows affinity to or chemical reactivity with an amide bond contained in the polyamide or a carboxyl group or an amino group existing at the terminal of the chain, in the same molecule in combination. Examples of such a polar group may include a carboxyl group of a carboxylic acid, a group derived from a carboxylic acid, i.e. various salts, esters, acidamides, acid anhydrides, imides, acid azides and acid halides in which hydrogen atom or hydroxyl group of the carboxyl group is substituted, or oxazolidone, nitrile, epoxy group, amino group, hydroxyl group or isocyanate.

As the compound having both of an unsaturated group and a polar group, there may be mainly used an unsaturated carboxylic acid, an unsaturated carboxylic acid derivative, an unsaturated epoxy compound, an unsaturated alcohol, an unsaturated amine and an unsaturated isocyanate.

More specifically, there may be mentioned an unsaturated dicarboxylic acid such as maleic anhydride, maleic acid, fumaric acid, maleimide, maleic acid hydrazide, a reaction product of maleic anhydride and diamine, for example, those having the structure represented by the formulae (II) and (III): 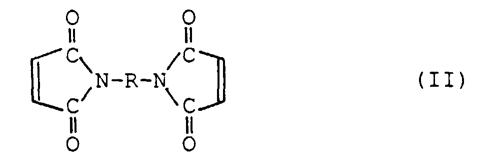 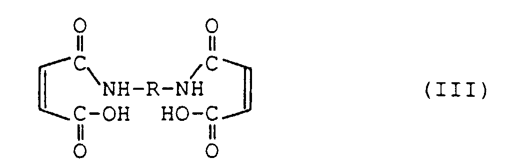 wherein R represents an aliphatic group or an aromatic group,
methylnadic anhydride, dichloromaleic anhydride, maleic acid amide, itaconic acid and itaconic anhydride, or a derivative thereof; natural oils and fats such as soybean oil, tung oil, castor oil, linseed oil, hempseed oil, cottonseed oil, sesame oil, rapseed oil, peanut oil, camellia oil, olive oil, coconut oil and sardine oil; epoxidized natural oils and fats such as epoxidized soybean oil; an unsaturated carboxylic acid such as acrylic acid, butenic acid, crotonic acid, vinylacetic acid, methacrylic acid, pentenoic acid, angelic acid, tiburic acid, 2-pentenoic acid, 3-pentenoic acid, α-ethylacrylic acid, β-methylcrotonic acid, 4-pentenoic acid, 2-hexenoic acid, 2-methyl-2-pentenoic acid, 3-methyl-2-pentenoic acid, α-ethylcrotonic acid, 2,2-dimethyl-3-butenoic acid, 2-heptenoic acid, 2-octenoic acid, 4-decenoic acid, 9-undecenoic acid, 10-undecenoic acid, 4-dodecenoic acid, 5-dodecenoic acid, 4-tetradecenoic acid, 9-tetradecenoic acid, 9-hexadecenoic acid, 2-octadecenoic acid, 9-octadecenoic acid, eicosenoic acid, docosenoic acid, erucic acid, tetracosenoic acid, micolipenoic acid, 2,4-pentadienoicacid, 2,4-hexadienoic acid, diallylacetic acid, geranic acid, 2,4-decadienoic acid, 2,4-dodecadienoic acid, 9,12-hexadecadienoic acid, 9,12-octadecadienoic acid, hexadecatrienoic acid, linolic acid, linoleic acid, octadedatrienoic acid, eicosadienoic acid, eicosatrienoic acid, eicosatetraenoic acid, ricinoleic acid, eleostearic acid, oleic acid, eicosapentaenoic acid, docosadienoic acid, docosatrienoic acid, docosatetraenoic acid, docosapentaenoic acid, tetracosenoic acid, hexacosenoic acid, hexacodienoic acid, octacosenoic acid and triacontenoic acid; an ester, acid amide or acid anhydride of these unsaturated carboxylic acids; an unsaturated alcohol such as allyl alcohol, crotyl alcohol, methyl vinyl carbinol, allyl carbinol, methylpropenyl carbinol, 4-penten-1-ol, 10-undecen-1-ol, propargyl alcohol, 1,4-pentadien-3-ol, 1,4-hexadien-3-ol, 3,5-hexadien-2-ol, 2,4-hexadien-1-ol, an alcohol represented by CₙH₂ₙ₋₅OH, CₙH₂ₙ₋₇OH and CₙH₂ₙ₋₉OH (where n is a positive integer), 3-buten-1,2-diol, 2,5-dimethyl-3-hexen-2,5-diol, 1,5-hexadien-3,4-diol and 2,6-octadien-4,5-diol; an unsaturated amine in which the OH group of the above unsaturated alcohol is replaced with NH2 group; a low molecular material such as butadiene and isoprene (e.g. those having an average molecular eight of 500 to 10,000) or a high molecular material (e.g. those having an average molecular weight of 10,000 or more) to which maleic anhydride or phenol is added or into which an amino group, a carboxyl group, a hydroxyl group or an epoxy group is introduced; or allyl isocyanate.

Also, in the definition of the compound having both of an unsaturated group and a polar group in the same molecule, it is needless to say that a compound having (the same or different kinds of) two or more unsaturated groups and (the same or different kinds of) two or more polar groups is included therein, and it is also possible to use two or more kinds of the compounds as Component (d). Of these, more preferred are unsaturated dicarboxylic acids and anhydride thereof such as maleic anhydride, maleic acid, itaconic anhydride and itaconic acid, unsaturated alcohols such as oleyl alcohol and epoxidized natural oil and fats, further preferably maleic anhydride, maleic acid, oleyl alcohol, epoxidized soybean oil and epoxidized linseed oil, particularly preferably maleic anhydride and a mixture of maleic anhydride and maleic acid.

The above components (a), (b), (c) and (d) are formulated in a ratio as mentioned below.

That is, a formulation ratio of each component is, based on the total amount of Components (a), (b), (c) and (d), 56 to 99 % by weight, preferably 60 to 80 % by weight, particularly preferably 62 to 80 % by weight of Component (a), 0.1 to 4.9 % by weight, preferably 0.5 to 4.0 % by weight, particularly preferably 1.0 to 4.0 % by weight of Component (b), 0.1 to 40 % by weight, preferably 5 to 38 % by weight, particularly preferably 15 to 35 % by weight of Component (c), and 0.2 to 10 % by weight, preferably 0.2 to 5 % by weight, particularly preferably 0.2 to 2 % by weight of Component (d).

If an amount of Component (a) is less than the above range, heat resistant rigidity of a final composition is insufficient, while it exceeds the above range, low temperature impact resistance of the final composition becomes insufficient. Also, if an amount of Component (b) is out of the above composition range, low temperature impact resistance of the final composition is insufficient. Further, if an amount of Component (c) is less than the above range, low temperature impact resistance of the final composition is insufficient, while it exceeds the above range, heat resistant rigidity of the final composition becomes insufficient. Moreover, if an amount of Component (d) is less than the above range, low temperature impact resistance of the final composition is insufficient, while it exceeds the above range, yellowing and silver streaking are caused in a molded product of the final composition at high temperature molding whereby causing difficulties in appearance of the molded product.

If 100 ppm or more of unreacted Component (d) remained in an intermediate composition (A) formed by (primary) melting and kneading Components (a) to (d), appearance defects such as yellowing and silver streaking are caused at high temperature molding. In order to prevent occurring in appearance defects, an amount of the remaining unreacted Component (d) is less than 100 ppm, desirably 80 ppm or less, particularly desirably 50 ppm or less.

To the intermediate composition (A) may be added, in addition to the above inevitable ingredients (a), (b), (c) and (d), optional components such as various stabilizers, flow modifiers, impact resistance improving fillers (e.g. granular inorganic filler having 1 µm or less), heat resistant rigidity improving fillers (e.g. needle or fibrous filler having an aspect ratio of 5 or more) in an amount which does not remarkably impair the effects of the present invention.

Primary melting and kneading of an intermediate composition (A) can be carried out firstly by mixing all the components by using a Henschel mixer, a super mixer, a ribbon blender or a V-shaped blender, and then melting and kneading the mixture by using a usual kneading machine such as a single axis or plural axis kneading extruder, a Banbury mixer, a roll mixer, a Brabender Plastgraph and a kneader as well as making the unreacted Component (d) remaining less than 100 ppm.

For decreasing a remaining amount of Component (d) having both of an unsaturated group and a polar group in the same molecule, the primary melted and kneaded product is stored by charging in a paper bag for a long period of time or melting and kneading are carried out in a single axis or plural axis kneading extruder equipped with a vent and having L/D = 10 to 30 while effecting vacuum deaeration from a vent port at the downstream side of the extruder whereby an intermediate composition (A) having a remaining unreacted Component (d) of less than 100 ppm can be produced.

When vacuum deaeration is effected by the vent port, a vacuum degree for the vacuum deaeration, that means the pressure of remaining gas in the extruder, is preferably 35 to 0 kPa (260 to 0 Torr) in order to remove the remaining unreacted Component (d) effectively from a melting resin. A temperature for melting and kneading at this time is generally in the range of 200 to 350 °C.

It may be also possible to make the remaining unreacted Component (b) less than 100 ppm by using pelletized or powdered starting materials with the following methods.

### (1) Heating and drying under reduced pressure

The above pelletized or powdered starting materials are placed in a heat dryer under reduced pressure and dried preferably in the conditions of a pressure of 0.01 to 1.3 kPa (0.1 to 10 Torr), a temperature of 120 to 160 °C for 3 to 30 hours.

### (2) Solvent washing

The above pelletized or powdered starting materials are charged in a pressure autoclave equipped with a stirrer, and adding an organic solvent, preferably chloroform under stirring and elevating the temperature to 60 °C to uniformly dissolve the mixture. After washing the solution with water, the solution was separated by a separatory funnel and chloroform in the resulting organic phase is removed by steam stripping to obtain an aqueous dispersion slurry. This slurry is dehydrated by using a centrifugal separator and a solid component is placed in a dryer and dried at 100 °C overnight.

The intermediate composition (A) can be used in the form of a melted one as such or pelletized one, or a material in which the pellets are pulverized to obtain powder and dried for preparation of a final composition.

As the polyamide (B) in the second step, the polyamides mentioned as Component (b) in the aforesaid intermediate composition (A) can be used.

In the second step, in addition to the intermediate composition (A) and the polyamide (B), optional components such as impact resistance improving agents and/or, in order to improve rigidity, heat resistance or dimensional stability, various fillers including granular fillers such as titanium oxide, kaolin, clay, barium sulfate and calcium carbonate; needle fillers such as wollastonite and spilosite; and fibrous fillers such as a glass fiber and a carbon fiber; or various stabilizers, lubricants, colorants, flow modifiers, nucleating agents and mildewproofing agents in an amount which does not remarkably impair the effects of the present invention.

The intermediate composition (A) and the polyamide can be formulated in a ratio as mentioned below.

That is, based on the total amount of Components (A) and (B), the intermediate composition (A) is formulated in an amount of 10 to 80 % by weight, preferably 15 to 75 % by weight, particularly preferably 20 to 65 % by weight and the polyamide (B) is formulated in an amount of 20 to 90 % by weight, preferably 25 to 85 % by weight, particularly preferably 35 to 80 % by weight.

If an amount of the intermediate composition (A) is less than the above range, heat resistant rigidity is insufficient, while it exceeds the above range, organic solvent resistance and low temperature impact resistance are insufficient. Also, if an amount of the polyamide (B) is less than the above range, organic solvent resistance and low temperature impact resistance are unsatisfactory, while it exceeds the above range, heat resistant rigidity becomes unsatisfactory.

For preparing the final resin composition of the present invention, (secondary) melting and kneading can be carried out by using, for example, the following respective methods to prepare the final resin composition.
1) A method in which a pelletized or powder intermediate composition (A) and a polyamide (B) are mixed in the same means as in the preparation of the intermediate composition (A) as mentioned above, and then the mixture is melted and kneaded by using a single axis or plural axis kneading extruder having L/D = 10 to 30 to prepare a final resin composition.
2) A method in which a polyamide (B) is added to a melted state intermediate composition (A) and then the mixture is melted and kneaded by using a single axis or plural axis kneading extruder having L/D = 10 to 30 to prepare a final resin composition.
3) A method in which, by using a single axis or plural axis kneading extruder equipped with a vent and having L/D = 30 to 60, each component of an intermediate composition (A) is introduced in the extruder from a first hopper in the state of a mixture before melting and kneading, and while deaerating from a vent provided between the first hopper and an intermediate hopper of said extruder, a polyamide (B) is introduced from the intermediate hopper simultaneously in the state of a solid or melting whereby melting and kneading whole the components to prepare a final resin composition.
4) A method in which a polyamide (B) is previously melting and kneading in a single axis or plural axis kneading extruder having L/D = 10 to 30, and the polyamide and an intermediate composition (A) are simultaneously melted and kneaded by using a single axis or plural axis kneading extruder having L/D = 10 to 30 in the form of pellets, powder which is pulverized the pellets or melting material to prepare a final resin composition.

In the above methods, a temperature of the secondary melting and kneading is generally in the rage of 200 to 350 °C.

A thermoplastic resin composition thus prepared can be extruded after the secondary melting and kneading to pelletize.

The thermoplastic resin composition to be prepared by the present invention can be easily molded by molding methods which are generally applied to a thermoplastic resin, i.e. such as an injection molding method, an extrusion molding method and a blow molding method. Of these, it is preferred to effect molding by using an injection molding method.

The thermoplastic resin composition prepared by the process of the present invention is suitable for the use of interior and exterior automotive trims, exterior parts of electrical equipments or parts of office automation equipments since its mechanical properties are good.

### EXAMPLES

In the following, the present invention will be described in detail by referring to Examples, but the present invention is not limited to these.

### Examples 1 to 3

### <Preparation of intermediate composition (A)>

### (a) Polyphenylene ether:

(a-1) A poly(2,6-dimethyl-1,4-phenylene) ether having an intrinsic viscosity of 0.51 dl/g (measured at 30 °C in chloroform) and (a-2) a poly(2,6-dimethyl-1,4-phenylene) ether having an intrinsic viscosity of 0.30 dl/g (measured at 30 °C in chloroform) were used.

### (b) Polyamide:

Non-crystalline polyamide resin (Novamid X21, trade name, available from Mitsubishi Kasei Corporation, a glass transition temperature: 125 °C and a relative viscosity according to JIS K6810 of 2.1) was used.

### (c) Impact modifier:

A commercially available hydrogenated styrene-butadiene block copolymer (SEBS; Kraton G1651, trade name, available from Shell Chemical Co., a styrene content: 33 % by weight) was used.

### (d) Compound having both of an unsaturated group and a polar group in the same molecule:

A commercially available maleic anhydride (reagent grade) was used.

The above Components (a), (b), (c) and (d) were sufficiently mixed by a super mixer according to the formulation ratio as shown in Table 1.

Next, the mixture was melted and kneaded by using a TEX biaxis kneading extruder (L/D = 30, equipped with a vent, manufactured by Nippon Seikosho K.K.) at a setting temperature of 260 °C, a screw rotary number of 400 rpm, and a vent deaeration vacuum degree of 21.3 kPa (160 Torr) to prepare a resin composition and then, it was extruded in the form of a strand and pelletized by a cutter. The product was dried in a hot air dryer at 105 °C for 8 hours. Thus, intermediate compositions (A-1) to (A-3) were prepared.

An amount of an unreacted remaining Component (d) (maleic anhydride) in the intermediate composition was measured by extracting the intermediate composition with acetone and the residue obtained was analyzed by using an infrared spectroscopic analyzer.

### <Preparation of resin composition>

### (A) Intermediate composition:

Intermediate compositions (A-1) to (A-3) prepared as mentioned above were used.

### (B) Polyamide:

Nylon 6 (Ultramid B-4, trade name, available from BASF AG (Germany), injection molding grade) and Nylon 66 (Ultramid A3W, trade name, available from BASF AG (Germany), injection molding grade) were used.

### Impact resistance modifier:

A commercially available styrene-butadiene block copolymer (SBS; KX65, trade name, available from Shell Chemical Co., a styrene content: 28 % by weight), a commercially available maleic anhydride-modified ethylene-propylene rubber (M-EPR; T7741P, trade name, available from Nippon Synthetic Rubber K.K., a maleic anhydride content: 0.5 to 1 % by weight) and a commercially available hydrogenated styrenebutadiene block copolymer (SEBS; Kraton G1651, trade name, available from Shell Chemical Co., a styrene content: 33 % by weight) were used.

### Inorganic filler:

A commercially available talc (LMS-100, trade name, available from Fuji Talc Kogyo K.K., an average particle size: 1.8 to 2.0 µm) was used.

Each of the above components was sufficiently mixed by a super mixer with the formulation ratio as shown in Table 2. Then, the mixture was melted and kneaded by using a TEX plural axis kneading extruder (manufactured by Nippon Seikosho K.K.) at a setting temperature of 240 °C and a screw rotary number of 400 rpm, and then pelletized.

### <Physical properties and evaluation tests>

Pellets of the resin composition as mentioned above were subjected to injection molding using an inline screw type injection molding machine (manufactured by Toshiba Kikai Seisakusho, IS-90B Type, trade name) at a cylinder temperature of 280 °C and a mold cooling temperature of 70 °C to prepare a test piece.

At injection molding, drying was carried out immediately before the molding by using a reduced pressure dryer at 0.1 Torr and 80 °C for 48 hours. Also, the injection molded test piece was placed in a desiccator immediately after the molding and allowed to stand for 4 to 6 days at 23 °C, and then, evaluation tests were carried out. The results are shown in Table 2.

Physical properties and various characteristics were measured and evaluated according to the following methods.

### (1) Appearance of the molded product

A molded product having a shape of a flat plate with a size of 150 x 150 x 3 mm was molded by using an inline screw type injection molding machine (manufactured by Toshiba Kikai Seisakusho, IS-90B Type, trade name) at a cylinder temperature of 320 °C and a dwelling time of 20 minutes, and generated states of yellowing and silver streaking of the molded product were observed according the following evaluation standard.
- ⓞ:: Extremely good
- O:: Good
- Δ:: Slightly bad
- X:: Bad

### (2) Izod impact strength

Izod strength of the molded product was measured according to ISO R180-1969 (JIS K7110) (Izod impact strength with notch) by using an Izod impact strength testing machine manufactured by Toyo Seiki Seisakusho. Atmospheric temperatures at the measurement were 23 °C and - 30 °C.

### (3) Flexural modulus

Flexural modulus of the molded product was measured according to ISO R178-1974 Procedure 12 (JIS K7203) by using an Instron testing machine. A temperature at the measurement was 23 °C.

### Example 4

### <Preparation of intermediate composition (A)>

By using the same components used in Example 1 with the same compositional ratio, the mixture was melted and kneaded by using a TEX biaxis kneading extruder (L/D = 30, equipped with a vent, manufactured by Nippon Seikosho K.K.) at a setting temperature of 260 °C, a screw rotary number of 400 rpm, and a vent deaeration vacuum degree of 101 kPa (760 Torr (atmospheric pressure)) to prepare a resin composition and then, it was extruded in the form of a strand and pelletized by a cutter.

The pellets were dried in a reduced-pressure hot air dryer under a vacuum degree of 0.67 kPa (5 Torr) at a temperature of 130 °C for 10 hours to obtain an intermediate composition (A-4).

An amount of an unreacted remaining Component (d) (maleic anhydride) in the intermediate composition was 80 ppm.

### <Preparation of resin composition, physical properties and evaluation tests>

By using the above intermediate composition (A-4) and using the same compositional components as in Example 1 except for using SEBS (Kraton G1651) in place of M-EPR (T-7741P) as impact resistance modifier, preparation of the resin composition, and physical properties and evaluation tests were carried out in the same manner as in Example 1. The results are shown in Table 2.

### Example 5

### <Preparation of intermediate composition (A)>

Pellets prepared in the same manner as in Example 4 were placed in a pressure autoclave equipped with a stirrer, and after adding chloroform to the pellets, a temperature of the mixture was raised to 60 °C while stirring whereby the mixture was uniformly dissolved. After washing with water and separating with a separatory funnel, chloroform in an organic layer was removed by steam stripping to obtain an aqueous dispersion slurry. This slurry was dehydrated by using a centrifugal separator and a solid component is placed in a dryer and dried at 100 °C overnight to obtain an intermediate composition (A-5).

An amount of an unreacted remaining Component (d) (maleic anhydride) in the intermediate composition was 20 ppm.

### <Preparation of resin composition, physical properties and evaluation tests>

By using the above intermediate composition (A-5) and using the same compositional components as in Example 4, preparation of the resin composition, and physical properties and evaluation tests were carried out in the same manner as in Example 4. The results are shown in Table 2.

### Comparative examples 1 to 5

By using the same compositional components as in Examples 1 to 3 with the composition ratio as shown in Tables 1 and 2 except for changing preparation step of the intermediate composition, resin compositions were prepared. That is, in Comparative examples 1 to 3, at the preparation of an intermediate composition, melting and kneading were carried out at a vent deaeration vacuum degree of 101 kPa (760 Torr (atmospheric pressure)), and in Comparative example 4, melting and kneading were carried out at a vent deaeration vacuum degree of 75 kPa (560 Torr), and preparation of a final composition was carried out in the same manner as in Examples 1 to 3, respectively. In Comparative example 5, the preparation step of an intermediate composition was omitted and melting and kneading was carried out with one step.

Physical properties and evaluation tests were carried out in the same manner as in Example 1. The results are shown in Table 2.

### Comparative example 6

By using the same compositional components as in Example 1 except for not formulating the polyamide of Component (b) in the step of preparing an intermediate composition (A), a final resin composition was prepared in the same manner as in Example 1.

Physical properties and evaluation tests were carried out in the same manner as in Example 1. The results are shown in Table 2.

As can be seen from the results shown in Table 2, it can be understood that the resin composition of the present invention in which an intermediate composition mainly comprising a polyphenylene ether and containing less than 100 ppm of an unreacted remaining Component (d) has been previously prepared and then a polyamide is melted and kneaded with the intermediate composition provides a molded product having a good surface appearance without occurring yellowing and silver streaking at a high temperature molding and without impairing low temperature impact resistance.

Thus, according to the present invention, a thermoplastic resin composition excellent in appearance of a molded product and in impact resistance can be obtained, and the use thereof is wide whereby it can be a material useful in industry.

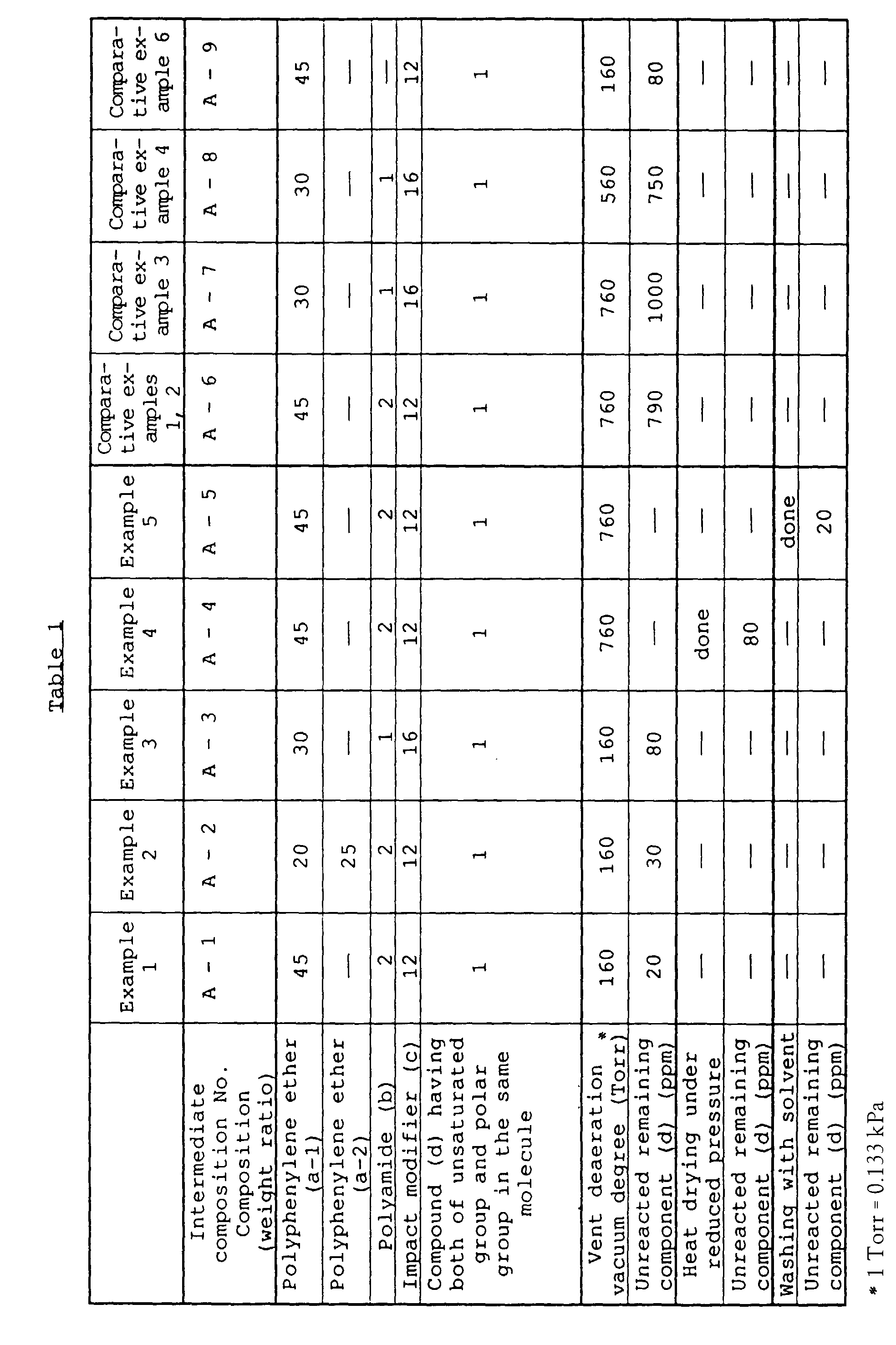

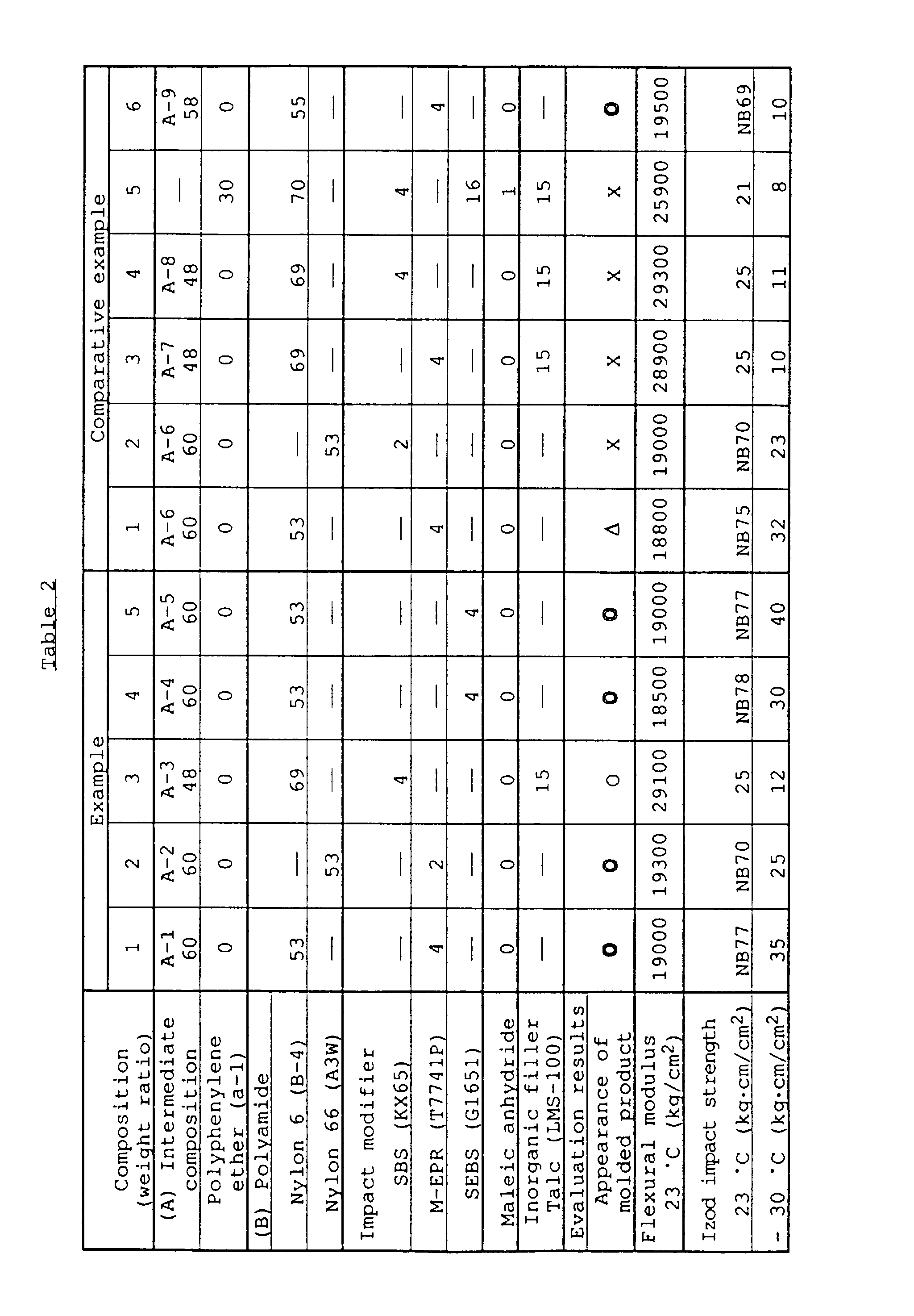

## Claims

1. A process for preparing a thermoplastic resin composition which comprises primary melting and kneading, based on the total amounts of the following components (a), (b), (c) and (d),
(a) 56 to 99 % by weight of a polyphenylene ether,
(b) 0.1 to 4.9 % by weight of a polyamide,
(c) 0.1 to 40 % by weight of an impact modifier and
(d) 0.2 to 10 % by weight of a compound having both of an unsaturated group and a polar group in the same molecule,
to obtain an intermediate composition (A) in which an amount of an unreacted remaining Component (d) is made less than 100 ppm, and secondary melting and kneading, based on the total amounts of the following components (A) and (B),
(A) 10 to 80 % by weight of the intermediate composition and
(B) 20 to 90 % by weight of a polyamide.

2. The process according to Claim 1, wherein the primary melting and kneading is carried out in a kneading extruder by melting and kneading a mixture of the intermediate composition (A), and simultaneously effecting vacuum deaeration from a vent deaeration port at a downstream side of the extruder to make an amount of an unreacted remaining Component (d) less than 100 ppm.

3. The process according to Claim 1, wherein the primary melting and kneading is carried out in a kneading extruder by melting and kneading a mixture of the intermediate composition (A), pelletizing or powdering the mixture and then hot air drying under reduced pressure to make an amount of an unreacted remaining Component (d) less than 100 ppm.

4. The process according to Claim 1, wherein the primary melting and kneading is carried out by a kneading extruder by melting and kneading a mixture of the intermediate composition (A), pelletizing or powdering the mixture and then subjecting to washing with a solvent to make an amount of an unreacted remaining Component (d) less than 100 ppm.

5. The process according to Claim 1, wherein an amount of an unreacted remaining Component (d) in the intermediate Composition formed by the primary melting and kneading is less than 80 ppm.

6. The process according to Claim 1, wherein an amount of an unreacted remaining Component (d) in the intermediate Composition formed by the primary melting and kneading is less than 50 ppm.

7. The process according to Claim 1, wherein the primary melting and kneading is carried out by using a composition comprising, based on the total amounts of the following components (a), (b), (c) and (d),
(a) 60 to 80 % by weight of a polyphenylene ether,
(b) 0.5 to 4.0 % by weight of a polyamide,
(c) 5 to 38 % by weight of an impact modifier and
(d) 0.2 to 5 % by weight of a compound having both of an unsaturated group and a polar group in the same molecule.

8. The process according to Claim 1, wherein the primary melting and kneading is carried out by using a composition comprising, based on the total amounts of the following components (a), (b), (c) and (d),
(a) 62 to 80 % by weight of a polyphenylene ether,
(b) 1.0 to 4.0 % by weight of a polyamide,
(c) 15 to 35 % by weight of an impact modifier and
(d) 0.2 to 2 % by weight of a compound having both of an unsaturated group and a polar group in the same molecule.

9. The process according to Claim 1, wherein the formulation ratio of the intermediate composition (A) and the polyamide (B) is, based on the total amounts of Component (A) and Component (B),
(A) 15 to 75 % by weight of the intermediate composition and
(B) 25 to 85 % by weight of the polyamide.

10. The process according to Claim 1, wherein the formulation ratio of the intermediate composition (A) and the polyamide (B) is, based on the total amounts of Component (A) and Component (B),
(A) 20 to 65 % by weight of the intermediate composition and
(B) 35 to 80 % by weight of the polyamide.

## Patentansprüche

1. Ein Verfahren zur Herstellung einer thermoplastischen Harzzusammensetzung, welches ein primäres Schmelzen und Kneten, basierend auf den Gesamtanteilen der folgenden Komponenten (a), (b), (c) und (d),
(a) 56 bis 99 Gew.% eines Polyphenylenethers,
(b) 0,1 bis 4,9 Gew.% eines Polyamids,
(c) 0,1 bis 40 Gew.% eines schlagzähmachenden Zusatzstoffs und
(d) 0,2 bis 10 Gew.% einer Verbindung, die sowohl eine ungesättigte Gruppe als auch eine polare Gruppe in demselben Molekül enthält,
um eine Zwischenzusammensetzung (A) zu erhalten, in welcher der Anteil der nicht reagierten zurückbleibenden Komponente (d) kleiner als 100 ppm gemacht wird, und ein sekundäres Schmelzen und Kneten, basierend auf den Gesamtanteilen der folgenden Komponenten (A) und (B),
(A) 10 bis 80 Gew.% der Zwischenzusammensetzung und
(B) 20 bis 90 Gew.% eines Polyamids, umfaßt.

2. Das Verfahren gemäß Anspruch 1, worin das primäre Schmelzen und Kneten in einem Knetextruder durch Schmelzen und Kneten einer Mischung der Zwischenzusammensetzung (A) durchgeführt wird, wobei gleichzeitig eine Vakuumentlüftung aus einer Entlüftungsöffnung auf der Austrittsseite des Extruders bewirkt wird, um die Menge der nicht reagierten zurückbleibenden Komponente (d) kleiner als 100 ppm zu machen.

3. Das Verfahren gemäß Anspruch 1, worin das primäre Schmelzen und Kneten in einem Knetextruder durch Schmelzen und Kneten einer Mischung der Zwischenzusammensetzung (A) durchgeführt wird, die Mischung pelletiert oder pulverisiert und dann unter vermindertem Druck heißluftgetrocknet wird, um die Menge der nicht reagierten zurückbleibenden Komponente (d) kleiner als 100 ppm zu machen.

4. Das Verfahren gemäß Anspruch 1, worin das primäre Schmelzen und Kneten in einem Knetextruder durch Schmelzen und Kneten einer Mischung der Zwischenzusammensetzung (A) durchgeführt wird, die Mischung pelletiert oder pulverisiert und dann einer Reinigung mit einem Lösungsmittel unterworfen wird, um die Menge der nicht reagierten zurückbleibenden Komponente (d) kleiner als 100 ppm zu machen.

5. Das Verfahren gemäß Anspruch 1, worin die Menge der nicht reagierten zurückbleibenden Komponente (d) in der Zwischenzusammensetzung, die durch das primäre Schmelzen und Kneten gebildet wird, unter 80 ppm liegt.

6. Das Verfahren gemäß Anspruch 1, worin die Menge der nicht reagierten zurückbleibenden Komponente (d) in der Zwischenzusammensetzung, die durch das primäre Schmelzen und Kneten gebildet wird, unter 50 ppm liegt.

7. Das Verfahren gemäß Anspruch 1, worin das primäre Schmelzen und Kneten unter Verwendung einer Zusammensetzung durchgeführt wird, welche, basierend auf den Gesamtanteilen der folgenden Komponenten (a), (b), (c) und (d),
(a) 60 bis 80 Gew.% eines Polyphenylenethers,
(b) 0,5 bis 4,0 Gew.% eines Polyamids,
(c) 5 bis 38 Gew.% eines schlagzähmachenden Zusatzstoffs und
(d) 0,2 bis 10 Gew.% einer Verbindung, die sowohl eine ungesättigte Gruppe als auch eine polare Gruppe in demselben Molekül enthält, umfaßt.

8. Das Verfahren gemäß Anspruch 1, worin das primäre Schmelzen und Kneten unter Verwendung einer Zusammensetzung durchgeführt wird, welche, basierend auf den Gesamtanteilen der folgenden Komponenten (a), (b), (c) und (d),
(a) 62 bis 80 Gew.% eines Polyphenylenethers,
(b) 1,0 bis 4,0 Gew.% eines Polyamids,
(c) 15 bis 35 Gew.% eines schlagzähmachenden Zusatzstoffs und
(d) 0,2 bis 2 Gew.% einer Verbindung, die sowohl eine ungesättigte Gruppe als auch eine polare Gruppe in demselben Molekül enthält, umfaßt.

9. Das Verfahren gemäß Anspruch 1, worin das Formulierungsverhältnis der Zwischenzusammensetzung (A) und des Polyamids (B), bezogen auf die Gesamtanteile der Komponenten (A) und (B)
(A) 15 bis 75 Gew.% der Zwischenzusammensetzung und
(B) 25 bis 85 Gew.% des Polyamids beträgt.

10. Das Verfahren gemäß Anspruch 1, worin das Formulierungsverhältnis der Zwischenzusammensetzung (A) und des Polyamids (B), bezogen auf die Gesamtanteile der Komponenten (A) und (B)
(A) 20 bis 65 Gew.% der Zwischenzusammensetzung und
(B) 35 bis 80 Gew.% des Polyamids beträgt.

## Revendications

1. Procédé pour préparer une composition de résine thermoplastique qui comprend une opération de fusion et de pétrissage primaire de, par rapport aux quantités totales des composants (a), (b), (c) et (d) suivants,
(a) 56 à 99% en poids d'un polyphénylèneéther,
(b) 0,1 à 4,9% en poids d'un polyamide,
(c) 0,1 à 40% en poids d'un modificateur de résistance au choc et
(d) 0,2 à 10% en poids d'un composé possédant à la fois un groupe insaturé et un groupe polaire dans la même molécule,
pour obtenir une composition intermédiaire (A) dans laquelle la quantité du composant (d) restant n'ayant pas réagi est rendue inférieure à 100 ppm, et une opération de fusion et de pétrissage secondaire de, par rapport aux quantités totales des composants (A) et (B) suivants,
(A) 10 à 80% en poids de la composition intermédiaire et
(B) 20 à 90% en poids d'un polyamide

2. Procédé selon la revendication 1, dans lequel l'opération de fusion et de pétrissage primaire est réalisée dans une extrudeuse pétrisseuse, par fusion et pétrissage d'un mélange de la composition intermédiaire (A), et simultanément dégazage sous vide à partir d'un orifice de dégazage en aval de l'extrudeuse, pour que la quantité de composant (d) restant n'ayant pas réagi soit rendue inférieure à 100 ppm.

3. Procédé selon la revendication 1, dans lequel l'opération de fusion et de pétrissage primaire est réalisée dans une extrudeuse, par fusion et pétrissage d'un mélange de la composition intermédiaire (A), pastillage ou réduction en poudre du mélange, puis séchage à l'air chaud sous pression réduite, pour que la quantité de composant (d) restant n'ayant pas réagi soit rendue inférieure à 100 ppm.

4. Procédé selon la revendication 1, dans lequel l'opération de fusion et de pétrissage primaire est réalisée dans une extrudeuse pétrisseuse, par fusion et pétrissage d'un mélange de la composition intermédiaire (A), pastillage ou réduction en poudre du mélange, puis lavage avec un solvant, pour que la quantité de composant (d) restant n'ayant pas réagi soit rendue inférieure à 100 ppm.

5. Procédé selon la revendication 1, dans lequel la quantité de composant (d) restant n'ayant pas réagi, dans la composition intermédiaire formée par l'opération de fusion et de pétrissage primaire, est inférieure à 80 ppm.

6. Procédé selon la revendication 1, dans lequel la quantité de composant (d) restant n'ayant pas réagi, dans la composition intermédiaire formée par l'opération de fusion et de pétrissage primaire, est inférieure à 50 ppm.

7. Procédé selon la revendication 1, dans lequel l'opération de fusion et de pétrissage primaire est réalisée à l'aide d'une composition comprenant, par rapport aux quantités totales des composants (a), (b), (c) et (d) suivants,
(a) 60 à 80% en poids d'un polyphénylèneéther,
(b) 0,5 à 4,0% en poids d'un polyamide,
(c) 5 à 38% en poids d'un modificateur de résistance au choc et
(d) 0,2 à 5% en poids d'un composé possédant à la fois un groupe insaturé et un groupe polaire dans la même molécule.

8. Procédé selon la revendication 1, dans lequel l'opération de fusion et de pétrissage primaire est réalisée à l'aide d'une composition comprenant, par rapport aux quantités totales des composants (a), (b), (c) et (d) suivants,
(a) 62 à 80% en poids d'un polyphénylèneéther,
(b) 1,0 à 4,0% en poids d'un polyamide,
(c) 15 à 35% en poids d'un modificateur de résistance au choc et
(d) 0,2 à 2% en poids d'un composé possédant à la fois un groupe insaturé et un groupe polaire dans la même molécule.

9. Procédé selon la revendication 1, dans lequel le rapport de formulation de la composition intermédiaire (A) et du polyamide (B) est, rapporté aux quantités totales du composant (A) et du composant (B),
(A) 15 à 75% en poids de la composition intermédiaire et
(B) 25 à 85% en poids du polyamide.

10. Procédé selon la revendication 1, dans lequel le rapport de formulation de la composition intermédiaire (A) et du polyamide (B) est, rapporté aux quantités totales du composant (A) et du composant (B),
(A) 20 à 65% en poids de la composition intermédiaire et
(B) 35 à 80% en poids du polyamide.
